# EUROPÄISCHE PATENTANMELDUNG

(11) **EP 1 378 843 A1**
(43) Veröffentlichungstag der Anmeldung: **07.01.2004**
(21) Anmeldenummer: 03014923.1
(22) Anmeldetag: 01.07.2003
(51) Int. Cl.: G06F 17/60, G07F 17/00, G07F 7/10, G07C 9/00

(54) **Verfahren und Datenverarbeitungssystem zur datentechnisch gesicherten Kommunikation zwischen Behörden und Bürgern**

(30) Priorität: 04.07.2002 DE 10230848
(71) Anmelder: Fiducia AG Karlsruhe/Stuttgart, 76227 Karlsruhe (DE)
(72) Erfinder: Clauss, Wolfgang, 73722 Esslingen (DE)
(74) Vertreter: Patentanwälte Bartels und Partner

(57) **Zusammenfassung**

Die Erfindung betrifft ein Verfahren zur datentechnisch gesicherten elektronischen Kommunikation zwischen Behörden und Bürgern, dadurch gekennzeichnet, daß die Kommunikation von einem Bürger an einem Bürgerterminal (2) sowohl die Abgabe einer mehrfach verwendbaren und in elektronischer Form übermittelbaren (6) Identifikationszeichenfolge (PIN) als auch die Abgabe einer in der Regel nur einmal verwendbaren und anschließend verbrauchten und in elektronischer Form übermittelbaren (12) Transaktionszeichenfolge (TAN) erfordert, daß die Identifikationszeichenfolge (PIN) dem Bürger vorgegeben ist oder vom Bürger vorgebbar ist, daß die Transaktionszeichenfolge (TAN) dem Bürger vorgegeben ist, daß die abgegebene Identifikationszeichenfolge (PIN) und Transaktionszeichenfolge (TAN) von einer ersten Datenverarbeitungsanlage (1) der Behörde empfangen wird, und daß die abgegebene Identifikationszeichenfolge (PIN) und Transaktionszeichenfolge (TAN) automatisch durch Vergleich mit elektronisch gespeicherten Referenzdaten auf ihre Korrektheit verifiziert werden, sowie ein zugehöriges Datenverarbeitungssystem.

## Beschreibung

Die Erfindung betrifft ein Verfahren und ein Datenverarbeitungssystem zur datentechnisch gesicherten Kommunikation zwischen Behörden und Bürgern gemäß dem Oberbegriff des Anspruchs 1.

Aus der DE 197 18 103 A1 ist ein Verfahren zur Autorisierung in Datenübertragungssystemen bekannt, bei dem ein Benutzer an einem Dateneingabegerät seine Identifizierung über einen ersten Übertragungsweg an einen Autorisierungsrechner sendet mit der Aufforderung zur Bereitstellung einer Transaktionsnummer, die über einen zweiten Übertragungsweg an den Benutzer übertragen wird. Der Benutzer gibt diese Transaktionsnummer wiederum in das Dateneingabegerät ein und überträgt es an den Autorisierungsrechner, der die Gültigkeit der Transaktionsnummer überprüft um gegebenenfalls einen Verbindungsaufbau zwischen dem Dateneingabegerät und einer Empfangseinheit herzustellen oder freizuschalten.

Aus der DE 100 45 924 A1 ist ein Verfahren zum Absichern einer Transaktion auf einem Computernetzwerk bekannt, bei dem an einen Benutzer ein einmaliges Transaktionskennwort übermittelt wird, welches zur Transaktionsbestätigung vom Benutzer über das Compternetzwerk an einen Anbieter übermittelt wird. Das Transaktionskennwort wird dabei über ein Mobilfunknetz an ein mobiles Kommunikationsendgerät des Benutzers übermittelt, wobei vor einer Übermittlung eine Überprüfung persönlicher Benutzerdaten erfolgt.

Aus der DE 100 39 569 C1 ist ein Bezahlverfahren unter Verwendung eines Mobiltelefons bekannt, bei dem von einer Vergabestelle an einen Händler eine Transaktionsnummer mit zeitlich begrenzter Gültigkeit übermittelt und dort einem Kunden angezeigt wird, der die Transaktionsnummer an seinem Mobiltelefon eingibt und an die Vergabestelle übermittelt, wobei er sich gegenüber der Vergabestelle identifiziert, die daraufhin gegebenenfalls die Zahlungsabwicklung veranlaßt.

Bei den bekannten Verfahren zur Kommunikation zwischen Behörden und Bürgern bieten die Behörden, beispielsweise kommunale Verwaltungen oder Finanzämter, beispielsweise auf einer Website im Internet, den elektronischen Abruf von Antragsformularen an. Die Einreichung des Antrages erfolgt allerdings nach wie vor in der Regel in Papierform, insbesondere weil zum rechtswirksamen Stellen des Antrages eine Unterschrift des Antragstellers oder seines Vertreters erforderlich ist.

Um die Kommunikation und insbesondere Vorgänge wie Rechtsgeschäfte, Transaktionen oder dergleichen, vollelektronisch abwickeln zu können, laufen derzeit Bemühungen zur Einführung einer sogenannten "digitalen Signatur". Hierfür sind jedoch in großem Umfang Investitionen sowohl auf Seiten der Behörden als auch insbesondere auf Seiten der Bürger erforderlich, die mit hohen Kosten verbunden sind. Nicht zuletzt aus diesem Grund hat sich das Verfahren der digitalen Signatur jedenfalls derzeit noch nicht durchgesetzt.

Der vorliegenden Erfindung liegt daher die Aufgabe zugrunde, ein Verfahren und ein Datenverarbeitungssystem zur datentechnisch gesicherten Kommunikation zwischen Behörden und Bürgern bereitzustellen, das einfach und auch kostengünstig einführbar und ausführbar ist, und daß darüber hinaus ein hohes Maß an Sicherheit gegenüber Manipulationen und unbefugten Handlungen gewährleistet.

Das Problem ist durch das im Anspruch 1 bestimmten Verfahren sowie durch das im nebengeordneten Anspruch bestimmte Datenverarbeitungssystem gelöst. Besondere Ausführungsarten der Erfindung sind in den Unteransprüchen bestimmt.

Erfindungsgemäß ist das Problem bei einem Verfahren zur datentechnisch gesicherten elektronischen Kommunikation zwischen Behörden und Bürgern, dadurch gelöst, daß die Kommunikation von einem Bürger an einem Bürgerterminal sowohl die Abgabe einer mehrfach verwendbaren und in elektronischer Form übermittelbaren Identifikationszeichenfolge als auch die Abgabe einer in der Regel nur einmal verwendbaren und anschließend verbrauchten und in elektronischer Form übermittelbaren Transaktionszeichenfolge erfordert, daß die Identifikationszeichenfolge dem Bürger vorgegeben ist oder vom Bürger vorgebbar ist, daß die Transaktionszeichenfolge dem Bürger vorgegeben ist, daß die abgegebene Identifikationszeichenfolge und Transaktionszeichenfolge von einer ersten Datenverarbeitungsanlage der Behörde empfangen wird, und daß die abgegebene Identifikationszeichenfolge und Transaktionszeichenfolge automatisch durch Vergleich mit elektronisch gespeicherten Referenzdaten auf ihre Korrektheit verifiziert und/oder protokolliert werden.

Die erste Stufe des erfindungsgemäßen Verfahrens besteht darin, daß ein Bürger, der beispielsweise von Zuhause aus über eine Datenverbindung seines Computers mit einer Behörde, beispielsweise der für seinen Wohnort zuständigen kommunalen Verwaltung, kommunizieren möchte, zunächst eine Identifikationszeichenfolge (persönliche Identifikationsnummer, kurz PIN) eingeben muß. Gegenstand der Kommunikation kann beispielsweise ein Antrag auf Änderung der Müllabfuhr, auf Änderung der Lohnsteuerklasse oder dergleichen sein. Die Identifikationszeichenfolge, gegebenenfalls zusammen mit dem Namen oder einem anderen individuellen Datum, identifiziert den Bürger gegenüber der Behörde, die den zu autorisierenden Vorgang ausführen oder verwalten soll, in den vorstehend genannten Beispielen demnach das Abfallwirtschaftsamt einer Kommune bzw. das Finanzamt. Die Identifikationszeichenfolge ist zwar in der Regel auf Wunsch des Bürgers änderbar, besitzt ansonsten aber prinzipiell zeitlich unbegrenzte Gültigkeit und ist daher immer wieder verwendbar.

Die zweite Stufe der Kommunikation erfolgt, indem der Bürger nach Eingabe der Identifikationszeichenfolge eine Transaktionszeichenfolge (Transaktionsnummer, kurz TAN) eingibt. Die Transaktionszeichenfolge dient einerseits zur Individualisierung der beauftragten Transaktion, indem die Transaktionszeichenfolge vom Bürger diesem Vorgang fest zugeordnet wird, und andererseits einer Überprüfung der Berechtigung des Bürgers durch die beauftragte Behörde. Entweder die Behörde selbst oder ein von der Behörde beauftragter Dienstleister stellt hierzu dem Bürger ein Set von Transaktionszeichenfolgen zur Verfügung, unter denen der Bürger für jeden Vorgang genau eine Transaktionszeichenfolge nach Belieben oder in einer vorgebbaren Reihenfolge auswählt und durch Eingabe in ein Datenverarbeitungsgerät dem betreffenden Vorgang fest zuordnet. Nach derart erfolgter Verwendung einer Transaktionszeichenfolge ist diese verbraucht in dem Sinne, daß sie nicht noch einmal von diesem Anwender verwendet werden kann.

Das vorstehend beschriebene erfindungsgemäße Verfahren ist insbesondere für alle Arten von Kommunikation zwischen einer Behörde, insbesondere einer staatlichen oder kommunalen Behörde, und einem Bürger einsetzbar, die für den Bürger eine verbindliche Wirkung hat, beispielsweise eine Gebührenpflicht zur Folge hat oder dergleichen. Das aus dem Internet-Banking seit Jahren bekannte und sich einer hohen Akzeptanz erfreuende PIN/TAN-Verfahren ist somit mit wenigen datentechnischen Modifikationen auch für das Verfahren zur Kommunikation zwischen Behörden und Bürgern verwendbar.

In der Regel wird sich der Bürger neben seiner Identifikationszeichenfolge auch mit seinem Namen oder einer vergleichbaren Identifikationsmöglichkeit bei der Behörde anmelden, die eine erste Prüfung durchführt oder von einem Dienstleister durchführen läßt und anschließend bereit ist, vom Bürger beispielsweise einen Antrag entgegenzunehmen, der von dem Bürger mit Abgabe einer Transaktionszeichenfolge sozusagen elektronisch unterzeichnet ist. Daraufhin führt die Behörde erneut selbst, oder durch den Dienstleister, eine Überprüfung der Transaktionszeichenfolge durch und verfährt im Falle einer positiven Verifikation entsprechend dem Antrag des Bürgers.

In einer besonderen Ausführungsart der Erfindung übermittelt das Bürgerterminal die eingegebenen Daten in elektronischer Form über ein erstes Datennetz an eine erste Datenverarbeitungsanlage der Behörde. Das Bürgerterminal kann durch den persönlichen Computer des Bürgers realisiert sein, und/oder es können an bestimmten und in der Regel jedenfalls zeitweise öffentlich zugänglichen Stellen entsprechende Bürgerterminals eingerichtet werden, beispielsweise im Rathaus einer Kommune, im Finanzamt oder dergleichen. Die elektronische Übermittlung der Daten kann insbesondere drahtgebunden erfolgen, beispielsweise über Telekommunikationsdatenverbindungen, wie sie auch für die Anbindung an das Internet verwendet werden. Darüber hinaus ist es auch denkbar, daß die Datenübertragung jedenfalls abschnittsweise auch drahtlos erfolgt, beispielsweise über entsprechende Datenverbindungen, die beispielsweise das Mobiltelefonfunknetz nutzen. Soweit die Behörden über einen Internetauftritt verfügen, ist es vorteilhaft, wenn auch die Übermittlung der Identifikationszeichenfolge und/oder der Transaktionszeichenfolge unter Verwendung des Internets erfolgt, wobei gegebenenfalls spezielle und erhöhten Sicherheitsanforderungen genügende Transaktionsprotokolle verwendet werden, wie beispielsweise gemäß "https" (secure hypertext transfer protocol).

In einer besonderen Ausführungsart der Erfindung übermittelt die erste Datenverarbeitungsanlage der Behörde die vom Bürger eingegebenen Daten in elektronischer Form über ein zweites Datennetz an eine zweite Datenverarbeitungsanlage eines Dienstleisters. In der zweiten Datenverarbeitungsanlage werden die Identifikationszeichenfolge und/oder die Transaktionszeichenfolge verifiziert, insbesondere mit den dort gespeicherten Referenzdaten verglichen. Je nachdem, welche Verfügbarkeit und Geschwindigkeit für die Verifikation erforderlich ist, kann das zweite Datennetz entweder auch ein öffentlich zugängliches Datennetz sein, insbesondere übereinstimmend mit dem ersten Datennetz das Internet, oder über eine Intranet-Datenverbindung realisiert sein, gegebenenfalls auch unter Verwendung einer sogenannten Standleitung.

In einer besonderen Ausführungsart der Erfindung wird von der zweiten Datenverarbeitungsanlage eine das Ergebnis der Verifikation enthaltende Mitteilung in elektronischer Form über das zweite Datennetz an die erste Datenverarbeitungsanlage der Behörde übermittelt. Im Falle einer positiven Verifikation sowohl der Identifikationszeichenfolge als auch der Transaktionszeichenfolge betrachtet sich die Behörde als ermächtigt, den vom Bürger gewünschten Vorgang abzuwickeln.

In einer besondere Ausführungsart der Erfindung werden die Identifikationszeichenfolge und/oder Transaktionszeichenfolge von dem Dienstleister verwaltet und insbesondere von dem Dienstleister dem Bürger direkt und ohne Umwege über die Behörde bzw. Kommune zur Verfügung gestellt. Die Behörde überträgt somit sämtliche Verwaltungstätigkeiten und Prüfungstätigkeiten im Zusammenhang mit der Kommunikation und insbesondere Verifikation der vom Bürger abgegebenen Daten auf einen Dienstleiter, der vorzugsweise auf diesem Gebiet eine spezielle Kompetenz erworben hat, insbesondere über die datentechnischen Einrichtungen zum Generieren und vertraulichen Versenden von eindeutigen Identifikationsund Transaktionszeichenfolgen verfügt. Dadurch sind die sicherheitsrelevanten Daten in der Regel bei der Behörde bzw. Kommune weder abgespeichert noch einsehbar, was die Manipulationssicherheit des Verfahrens weiter erhöht.

In einer besonderen Ausführungsart der Erfindung richtet die Behörde bzw. Kommune für den Bürger ein elektronisches Postfach ein, in das vorzugsweise nur die Behörde Mitteilungen für den Bürger einstellen kann. Unter Verwendung seiner Identifikationszeichenfolge und/oder seiner Transaktionszeichenfolge kann der Bürger die Mitteilungen auf elektronischem Wege auslesen und an seinem Bürgerterminal anzeigen lassen. Aus diesem Wege ist eine rasche und vor allem kostengünstige Möglichkeit gegeben, seitens der Behörde dem Bürger Mitteilungen zukommen zu lassen. Das Verfahren kann außerdem vorsehen, daß der Behörde automatisch eine Rückmeldung gegeben wird, sobald der Bürger die Mitteilung ausgelesen und gegebenenfalls deren Zugang auch ausdrücklich bestätigt hat.

In einer besonderen Ausführungsart der Erfindung wird die in das elektronische Postfach eingestellte Mitteilung datentechnisch mit einem Zeitstempel versehen, wobei nach Ablauf einer vorgebbaren Zeitdauer eine entsprechende Mitteilung dem Bürger auf dem Postweg, per Telefax, durch Boten oder dergleichen zugestellt wird, wenn der Bürger die Mitteilung während dieser Zeitdauer nicht auf elektronischem Wege ausgelesen hat und/oder deren Zugang nicht bestätigt hat. Der Ablauf der Zeitdauer wird vorzugsweise von der Datenverarbeitungseinrichtung der Behörde oder dem Dienstleister automatisch überwacht. Die verhältnismäßig kostenintensive Zustellung per Briefpost oder dergleichen ist somit nur noch für die Fälle erforderlich, in denen der Bürger die Mitteilung nicht rechtzeitig aus seinem elektronischen Postfach abholt. In einer besonderen Ausführungsart der Erfindung kann der Bürger in seinem elektronischen Postfach auch Einstellungen vornehmen, die beispielsweise während einer Urlaubsabwesenheit oder einer Verhinderung des Zugriffs auf das elektronische Postfach den Ablauf der vorgegebenen Zeitdauer hemmt, so daß nicht unnötig eine Zustellung per Briefpost oder dergleichen erfolgt.

Die Erfindung betrifft auch einen Computer, insbesondere ein Bürgerterminal, eine erste Datenverarbeitungsanlage bei der Behörde, und/oder eine zweite Datenverarbeitungsanlage bei dem Dienstleister, der programmtechnisch eingerichtet ist zur Durchführung des in dieser Anmeldung beschriebenen Verfahrens. Auf Seiten des Bürgerterminals ist beispielsweise ein Computerprogramm erforderlich, welches die Identifikationszeichenfolge und/oder Transaktionszeichenfolge abfragt bzw. eine entsprechende Abfrage anzeigt, die über das erste Datennetz empfangen wird. Auf Seiten des Bürgerterminals kann außerdem vorgesehen sein, daß die Identifikationszeichenfolge und/oder die Transaktionszeichenfolge elektronisch abgespeichert ist, beispielsweise auf einer Chipkarte. Darüber hinaus kann die programmtechnische Ausgestaltung auf Seiten des Bürgerterminals vorsehen, daß die Identifikationszeichenfolge und die jeweils nächste gültige Transaktionszeichenfolge automatisch eingefügt werden, und die entsprechende Transaktionszeichenfolge anschließend als verbraucht datentechnisch gekennzeichnet wird.

Die vorliegende Erfindung betrifft auch ein Datenverarbeitungssystem zur Durchführung eines Verfahrens zur datentechnisch gesicherten elektronischen Kommunikation zwischen einer Behörde, insbesondere einer Kommune, und einem Bürger. Das Bürgerterminal und die erste Datenverarbeitungsanlage der Behörde können dabei über ein erstes Datennetz auf elektronischem Wege Daten miteinander austauschen. Vorzugsweise wird die erste Datenverarbeitungsanlage der Behörde mehr oder weniger permanent an dem Datennetz angeschlossen sein, wogegen es für viele Anwendungsfälle ausreichend sein wird, daß das Bürgerterminal nur im Bedarfsfall an das erste Datennetz angeschlossen wird. In der Regel ist das Bürgerterminal, die erste Datenverarbeitungsanlage der Behörde, und die zweite Datenverarbeitungsanlage des Dienstleisters an räumlich unterschiedlichen Orten angeordnet, aber über das erste bzw. zweite Datennetz miteinander verbunden. Insbesondere kann die zweite Datenverarbeitungsanlage des Dienstleisters eine Vielzahl von ersten Datenverarbeitungsanlagen verschiedener Behörden oder Kommunen mit den Datensicherheitsdienstleistungen versorgen. Andererseits kann die erste Datenverarbeitungsanlage der Behörde bzw. Kommune gleichzeitig oder nacheinander mit einer Vielzahl von Bürgerterminals in Verbindung stehen.

Weitere Vorteile, Merkmale und Einzelheiten der Erfindung ergeben sich aus den Unteransprüchen sowie der nachfolgenden Beschreibung, in der unter Bezugnahme auf die Zeichnungen mehrere Ausführungsbeispiele im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt in schematischer Darstellung den Ablauf des erfindungsgemäßen Verfahrens,
- Fig. 2: zeigt in schematischer Darstellung die Bereitstellung der Identifikationszeichenfolge und/oder der Transaktionszeichenfolge,
- Fig. 3: zeigt die datentechnische Architektur eines ersten Ausführungsbeispiels, und
- Fig. 4: zeigt die datentechnische Architektur eines zweiten Ausführungsbeispiels.

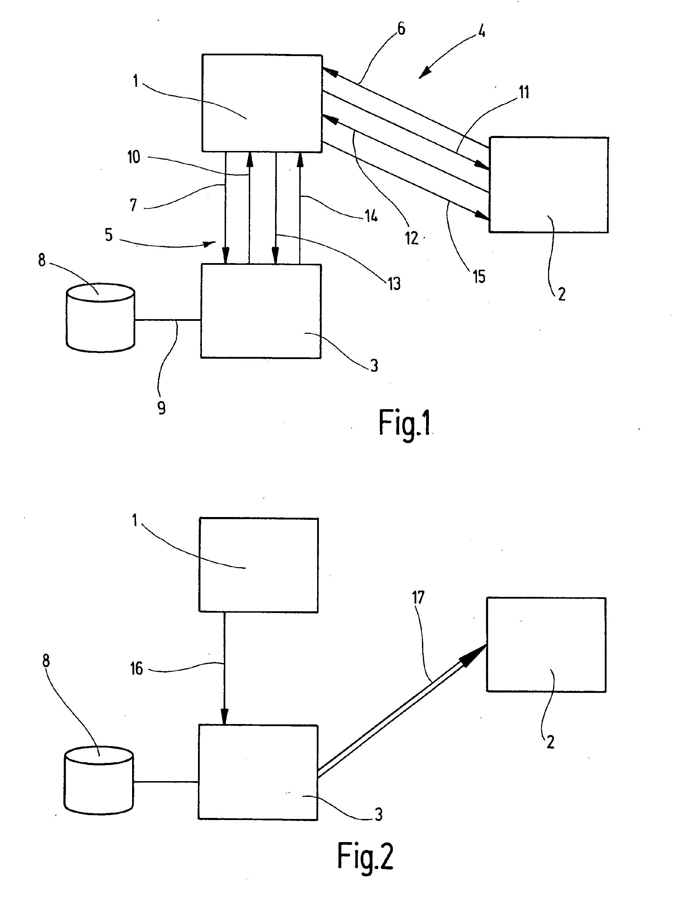

Die Fig. 1 zeigt in schematischer Darstellung den Ablauf des erfindungsgemäßen Verfahrens zur datentechnisch gesicherten elektronischen Kommunikation zwischen einer Behörde, insbesondere einer kommunalen Behörde, und einem Bürger der Kommune. Am Ort der Behörde ist eine erste Datenverarbeitungsanlage 1 vorgesehen.
Im dargestellten Ausführungsbeispiel ist am Ort, insbesondere der Wohnung des Bürgers, ein Bürgerterminal 2 vorgesehen. Die erste Datenverarbeitungsanlage 1 und das Bürgerterminal 2 können Daten auf elektronischem Wege über ein erstes Datennetz 4 austauschen. An einem im dargestellten Ausführungsbeispiel dritten Ort ist eine zweite Datenverarbeitungsanlage 3 eines Dienstleistungsanbieters vorgesehen.
Die erste Datenverarbeitungsanlage 1 und die zweite Datenverarbeitungsanlage 3 können Daten auf elektronischem Wege über ein zweites Datennetz 5 austauschen. Am Ort der zweiten Datenverarbeitungsanlage 3, insbesondere in diese integriert, oder davon beabstandet und gegebenenfalls sogar an einem örtlich weiter entfernten Ort, beispielsweise in einem Rechenzentrum des Dienstleistungsanbieters, ist ein Datenspeicher 8 angeordnet, der erforderlichenfalls und dann vorzugsweise über eine Standleitung 9 mit der zweiten Datenverarbeitungsanlage 3 auf elektronischem Wege Daten austauschen kann.

Im Rahmen der Kommunikation zwischen der Behörde und dem Bürger wird in einem ersten Schritt eine Verbindung zwischen dem Bürgerterminal 2 und der ersten Datenverarbeitungsanlage 1 aufgebaut. Im Rahmen dieses ersten Schritts wird in elektronischer Form eine Identifikationszeichenfolge PIN von dem Bürgerterminal 2 zu der ersten Datenverarbeitungsanlage 1 übermittelt 6. Die Identifikationszeichenfolge PIN ist in der Regel mehrfach verwendbar und kann dem Bürger von der Behörde oder dem Dienstleister vorgegeben sein oder von dem Bürger vorgebbar sein. In vielen Fällen wird der Bürger zusammen mit der Identifikationszeichenfolge, die ihm in der Regel vertraulich auf nichtelektronischem Wege zugesandt wurde und die vom Bürger vertraulich behandelt wird, ein nicht vertrauliches Identifikationsdatum an die erste Datenverarbeitungsanlage 1 senden, beispielsweise seinen Namen oder eine Registriernummer.

Daraufhin übermittelt 7 die erste Datenverarbeitungsanlage 1 die Identifikationsdaten einschließlich der Identifikationszeichenfolge PIN an die zweite Datenverarbeitungsanlage 3 des Dienstleisters. Dort werden diese Daten mit im Datenspeicher 8 gespeicherten Referenzdaten verglichen und insbesondere verifiziert, ob die vom Bürger abgegebene Identifikationszeichenfolge PIN zu dem Namen gehört oder nicht.
Das Ergebnis dieser Verifikation wird von der zweiten Datenverarbeitungsanlage 3 über das zweite Datennetz 5 an die erste Datenverarbeitungsanlage 1 der Behörde übertragen 10. Je nach Art und Vertraulichkeit des zwischen der Behörde und dem Bürger abzuwickelnden Vorganges liegt dem Bürger bereits vor der positiven Verifikation der Identifikationszeichenfolge PIN beispielsweise ein auf elektronischem Wege mittels des ersten Datennetzes 4 übertragenes Antragsformular vor oder wird ihm erst nach erfolgter positiver Verifikation der Identifikationszeichenfolge PIN über das erste Datennetz 4 übertragen 11.

Der Bürger macht daraufhin mittels Eingaben an dem Bürgerterminal 2 die ggf. erforderlichen Eingaben bzw. Angaben und _{"}unterzeichnet" seine Erklärung mit einer Transaktionszeichenfolge, die über das erste Datennetz 4 auf elektronischem Wege an die erste Datenverarbeitungsanlage 1 übertragen 12 wird. Von der ersten Datenverarbeitungsanlage 1 wird die Transaktionszeichenfolge TAN über das zweite Datennetz 5 an die zweite Datenverarbeitungsanlage 3 des Dienstleisters übertragen 13 und dort unter Heranziehung von auf dem Datenspeicher 8 abgelegten Referenzdaten verifiziert. Das Ergebnis der Verifikation wird über das zweite Datennetz 5 an die erste Datenverarbeitungsanlage 1 der Behörde übertragen 14. Daraufhin kann die Behörde das Entsprechende veranlassen, beispielsweise die Ausstellung bzw. der Ausdruck einer neuen Lohnsteuerkarte, das Zustellen eines größeren Müllbehälters oder dergleichen. Ggf. erhält der Bürger über das erste Datennetz 4 eine entsprechende Bestätigung 15.

Im dargestellten Ausführungsbeispiel autorisiert sich der Bürger mit der Identifikationszeichenfolge PIN gegenüber der Behörde. Als Identifikationszeichenfolge PIN kann auch jedenfalls ein Teil der Nummer seines Personalausweises oder seines Führerscheins verwendet werden, die der Behörde bekannt ist. Sowohl die Identifikationszeichenfolge PIN als auch die Transaktionsfolge TAN sollte mit größtmöglicher Sicherheit vom Bürgerterminal 2 zur ersten Datenverarbeitungsanlage 1 übertragen werden, beispielsweise unter Verwendung des Protokolls "https" über das Internet. Die Verifikation der Identifikationszeichenfolge PIN und/oder der Transaktionszeichenfolge TAN erfolgt vorzugsweise nicht bei der Behörde oder Kommune selbst, insbesondere nicht in der ersten Datenverarbeitungsanlage 1, sondern vorzugsweise bei einem Dienstleistungsanbieter, insbesondere in einer gegenüber der ersten Datenverarbeitungsanlage 1 an einem entfernten Ort angeordneten zweiten Datenverarbeitungsanlage 3, wobei die Verbindung zwischen der ersten und zweiten Datenverarbeitungsanlage 1, 3 auch über ein öffentliches Datennetz erfolgen kann, insbesondere bei größeren Behörden und Kommunen über eine Standleitung 9 erfolgen kann.

Die Fig. 2 zeigt in schematisierender Darstellung die Bereitstellung der Identifikationszeichenfolge PIN und/oder der Transaktionszeichenfolge TAN an den Bürger auf konventionellem Weg oder auf elektronischem Weg an das Bürgerterminal 2. Hierzu wird zunächst von der Behörde über die erste Datenverarbeitungsanlage 1 eine entsprechende Aufforderung 16 an die zweite Datenverarbeitungsanlage 3 des Dienstleisters übertragen.
Die Aufforderung 16 kann sowohl die Neuanlage eines noch nicht vorhandenen Datensatzes, beispielsweise für einen neu hinzugezogenen Bürger sein, oder die Löschung eines weggezogenen Bürgers, oder beliebige Änderungen, beispielsweise die Änderung des Familienstandes. Sofern es sich bei der Aufforderung 16 um beispielsweise eine Neuanlage eines neu hinzugezogenen Bürgers handelt, wird zunächst ein entsprechender Datensatz auf dem Datenspeicher 8 generiert.

Im dargestellten Ausführungsbeispiel wird von der zweiten Datenverarbeitungsanlage 3 sowohl die Identifikationszeichenfolge PIN als auch eine Reihe von Transaktionszeichenfolgen TAN generiert und dem Bürger zugestellt 17. Die Zustellung 17 kann grundsätzlich auch auf elektronischem Wege über ein Datennetz erfolgen. Vorzugsweise wird jedoch aufgrund der hohen Sicherheitsanforderungen eine getrennte Briefpostversendung der Identifikationszeichenfolge PIN und der Transaktionszeichenfolge TAN durchgeführt. Im dargestellten Ausführungsbeispiel erfolgt die Zustellung direkt vom Dienstleister an den Bürger, insbesondere unter Ausschluß der Behörde. In entsprechender Weise kann der Bürger direkt bei dem Dienstleister neue Transaktionszeichenfolgen anfordern, sofern diese ihm nicht ohnehin automatisch zur Verfügung gestellt werden. Auf vorzugsweise elektronischem Weg hat der Bürger weiterhin die Möglichkeit, seine in der zweiten Datenverarbeitungsanlage 3 über ihn gespeicherten Daten einzusehen, Protokolle über verbrauchte Transaktionszeichenfolgen TAN einzusehen, seine Identifikationszeichenfolge PIN abzuändern oder dergleichen.

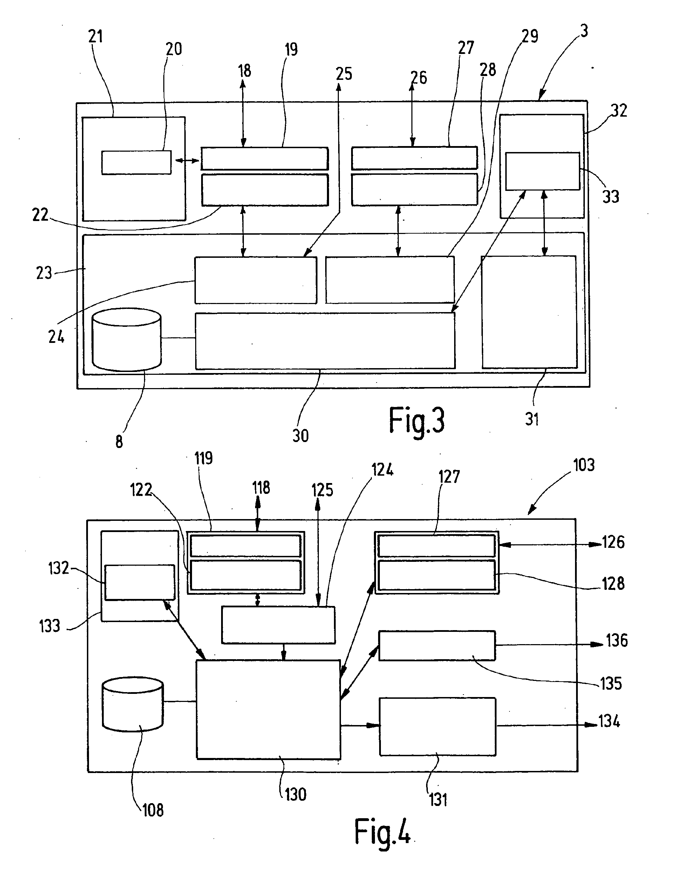

Die Fig. 3 zeigt die datentechnische Architektur der zweiten Datenverarbeitungsanlage 3. Über eine erste Schnittstelle 18 ist die zweite Datenverarbeitungsanlage 3 mit der ersten Datenverarbeitungsanlage 2 der Behörde bzw. Kommune verbindbar. Dies erfolgt beispielsweise nach dem Protokoll "https". Über diese Schnittstelle erfolgt beispielsweise die Erfassung von Freigaben der Identifikationszeichenfolge PIN, entsprechende Sperrungen oder dergleichen. Die erste Schnittstelle 18 kann daher durch einen Einzelarbeitsplatz, ein Call-Center oder dergleichen realisiert sein. Diese Funktion kann auch durch den Dienstleister erbracht werden.

Innerhalb der zweiten Datenverarbeitungsanlage 3 kommuniziert die erste Schnittstelle 18 mit einem ersten Webserver 19, der seinerseits mit einem Browser 20 verbunden ist, der beispielsweise auch einem Arbeitsplatz 21 bei der Behörde oder Kommune zugeordnet sein kann. Dem ersten Webserver 19 ist ein erstes Web-User-Interface-Handling 22 zugeordnet, das eine Schnittstelle zu den internen Diensten 23 der zweiten Datenverarbeitungsanlage 3 bildet. Die Kommunikation erfolgt diesbezüglich vorzugsweise nach dem Standard-Protokoll "http".

Insbesondere kommuniziert das erste Web-User-Interface-Handling 22 mit einem ersten Server 24, der beispielsweise das Neuanlegen von Datensätzen, die Freigabe nach Eingang von Identifikationszeichenfolgen, das Ändern von Daten, das Löschen, Sperren und Wieder-Freigeben steuert. Auf diesen ersten Server 24 kann auch mittels der zweiten Schnittstelle 25 zugegriffen werden, insbesondere unter Verwendung des Protokolls "https".

Über diese zweite Schnittstelle 25 werden Autorisierungsanfragen, Verifikationen von Transaktionszeichenfolgen und dergleichen abgewickelt.

Über eine dritte Schnittstelle 26 wird vorzugsweise nach dem Protokoll "https" die Kommunikation mit dem Bürger abgewickelt, und auf einen entsprechenden zweiten Webserver 27 zugegriffen. Dieser wiederum ist einem zweiten Web-User-Interface-Handling 28 zugeordnet, das über eine Schnittstelle nach dem Standard-Protokoll "http" mit einem zweiten Server 29 kommuniziert. Dem ersten und zweiten Server 24, 28 ist eine Datenverarbeitungseinheit 30 unterlegt, in der programmtechnisch Dienstleistungen implementiert sind, die von der Behörde bzw. Kommune und/oder dem Bürger vorgebbar sind. Die Datenverarbeitungseinheit 30 steht in Verbindung mit dem Datenspeicher 8 und besitzt als Ausgabemöglichkeit Zugriff beispielsweise auf den Drucker 31. Sowohl die Datenverarbeitungseinheit 30 als auch der Drucker 31 sind auch von einem Arbeitsplatz 32 eines Administrators und insbesondere einer zugehörigen Steuereinheit 33 ansprechbar.

Die Fig. 4 zeigt die interne Architektur der zweiten Datenverarbeitungsanlage 103 im Fall der Ausgestaltung des erfindungsgemäßen Verfahrens zur Einrichtung eines elektronischen Postfaches. Zur Behörde hin wird eine jeweils dem Protokoll "https" folgende Schnittstelle 118 bzw. 125 bereitgestellt. Soweit die hardwaretechnischen und softwaretechnischen Komponenten dieses zweiten Ausführungsbeispieles des Datenverarbeitungssystems 103 dem des in Fig. 3 dargestellten ersten Ausführungsbeispiel entsprechen, sind entsprechende, mit einer führenden Hunderterziffer versehene Bezugszeichen verwendet.

Ein wesentlicher Unterschied des zweiten Ausführungsbeispieles gegenüber dem ersten Ausführungsbeispiel ergibt sich dadurch, daß von der Datenverarbeitungseinheit 130 nicht nur der Drucker 131 angesteuert wird, sondern gleichzeitig auch die Versendung 134 der Mitteilungen für den Fall veranlaßt werden, daß die im elektronischen Postfach bereitgestellte Mitteilung nicht innerhalb der vorgegebenen Zeitdauer abgeholt wurde. Die Abholung aus dem elektronischen Postfach ist über die dritte Schnittstelle 126 vorgesehen, die vorzugsweise auch nach dem Protokoll "https" abgearbeitet wird. Das dargestellte zweite Ausführungsbeispiel zeigt darüber hinaus die Möglichkeit, dem Bürger mittels einer Benachrichtigungseinheit 135 eine E-Mail, eine Kurzmitteilung (SMS) oder dergleichen zukommen zu lassen, mit dem Inhalt, daß in seinem elektronischen Postfach für ihn eine Mitteilung zur Abholung bereitliegt.

## Patentansprüche

1. Verfahren zur datentechnisch gesicherten elektronischen Kommunikation zwischen Behörden und Bürgern, **dadurch gekennzeichnet, daß** die Kommunikation von einem Bürger an einem Bürgerterminal (2) sowohl die Abgabe einer mehrfach verwendbaren und in elektronischer Form übermittelbaren (6) Identifikationszeichenfolge (PIN) als auch die Abgabe einer in der Regel nur einmal verwendbaren und anschließend verbrauchten und in elektronischer Form übermittelbaren (12) Transaktionszeichenfolge (TAN) erfordert, daß die Identifikationszeichenfolge (PIN) dem Bürger vorgegeben ist oder vom Bürger vorgebbar ist, daß die Transaktionszeichenfolge (TAN) dem Bürger vorgegeben ist, daß die abgegebene Identifikationszeichenfolge (PIN) und Transaktionszeichenfolge (TAN) von einer ersten Datenverarbeitungsanlage (1) der Behörde empfangen wird, und daß die abgegebene Identifikationszeichenfolge (PIN) und Transaktionszeichenfolge (TAN) automatisch durch Vergleich mit elektronisch gespeicherten Referenzdaten auf ihre Korrektheit verifiziert werden.

2. Verfahren nach Anspruch 1, **dadurch gekennzeichnet, daß** das Bürgerterminal (2) über ein erstes Datennetz (4) die eingegebenen Daten in elektronischer Form an eine erste Datenverarbeitungsanlage (1) der Behörde übermittelt.

3. Verfahren nach Anspruch 2, **dadurch gekennzeichnet, daß** die erste Datenverarbeitungsanlage (1) der Behörde die eingegebenen Daten in elektronischer Form über ein zweites Datennetz (5) an eine zweite Datenverarbeitungsanlage (3) eines Dienstleisters übermittelt, und daß in der zweiten Datenverarbeitungsanlage (3) die Identifikationszeichenfolge (PIN) und/oder die Transaktionszeichenfolge (TAN) verifiziert wird.

4. Verfahren nach Anspruch 3, **dadurch gekennzeichnet, daß** von der zweiten Datenverarbeitungsanlage (3) eine das Ergebnis der Verifikation enthaltende Mitteilung in elektronischer Form über das zweite Datennetz (5) an die erste Datenverarbeitungsanlage (1) übermittelt wird.

5. Verfahren nach einem der Ansprüche 1 bis 4, **dadurch gekennzeichnet, daß** die Identifikationszeichenfolge (PIN) und/oder die Transaktionszeichenfolge (TAN) von einem Dienstleister verwaltet werden und insbesondere von dem Dienstleister dem Bürger zur Verfügung gestellt werden.

6. Verfahren nach einem der Ansprüche 1 bis 5, **dadurch gekennzeichnet, daß** das erste und/oder das zweite Datennetz (4, 5) Teil eines öffentlich zugänglichen Datennetzes ist, insbesondere des Internets.

7. Verfahren nach Anspruch 1, **dadurch gekennzeichnet, daß** Vorgänge wie Rechtsgeschäfte, Transaktionen oder dergleichen, autorisiert werden, wobei mittels der vom Bürger abgegebenen Identifikationszeichenfolge (PIN) die korrekte Identifizierung des Bürgers verifiziert wird, und mittels der vom Bürger abgegebenen Transaktionszeichenfolge (TAN) die korrekte Autorisierung des Bürgers für das jeweilige Rechtsgeschäft verifiziert wird.

8. Verfahren nach einem der Ansprüche 1 bis 7, **dadurch gekennzeichnet, daß** die Behörde für den Bürger ein elektronisches Postfach eingerichtet hat, in das die Behörde Mitteilungen für den Bürger einstellt, die der Bürger nach Eingabe der Identifikationszeichenfolge (PIN) und/oder der Transaktionszeichenfolge (TAN) auf elektronischem Weg ausliest, und die auf dem Bürgerterminal (2) angezeigt werden.

9. Verfahren nach Anspruch 8, **dadurch gekennzeichnet, daß** die in das elektronische Postfach eingestellte Mitteilung datentechnisch mit einem Zeitstempel versehen wird, und daß nach Ablauf einer vorgebbaren Zeitdauer eine entsprechende Mitteilung dem Bürger auf dem Postweg, per Telefax, durch Boten oder dergleichen zugestellt wird, wenn der Bürger während dieser Zeitdauer die Mitteilung nicht auf elektronischem Weg mittels des Bürgerterminals (2) ausgelesen hat.

10. Computer, insbesondere ein Bürgerterminal (2), eine erste Datenverarbeitungsanlage (1) bei der Behörde, eine zweite Datenverarbeitungsanlage (3) bei einem Dienstleister, oder dergleichen, **dadurch gekennzeichnet, daß** der Computer programmtechnisch eingerichtet ist zur Durchführung des Verfahrens nach einem der Ansprüche 1 bis 9.

11. Datenverarbeitungssystem zur Durchführung eines Verfahren zur datentechnisch gesicherten elektronischen Kommunikation zwischen Behörden und Bürgern, mit einem Bürgerterminal (2), an dem der Bürger sowohl eine mehrfach verwendbare und in elektronischer Form übermittelbare (6) Identifikationszeichenfolge (PIN) eingibt als auch eine in der Regel nur einmal verwendbare und anschließend verbrauchte und in elektronischer Form übermittelbare (12) Transaktionszeichenfolge (TAN) eingibt, wobei die Identifikationszeichenfolge (PIN) von dem Computersystem dem Bürger vorgegeben ist oder vom Bürger vorgebbar ist, und die Transaktionszeichenfolge (TAN) von dem Computersystem dem Bürger vorgegeben ist, weiterhin mit einer ersten Datenverarbeitungsanlage (1) der Behörde, welche die abgegebene Identifikationszeichenfolge (PIN) und Transaktionszeichenfolge (TAN) über ein erstes Datennetz (4) empfängt, wobei mittels des Computersystems die abgegebene Identifikationszeichenfolge (PIN) und die abgegebene Transaktionszeichenfolge (TAN) durch Vergleich mit elektronisch gespeicherten Referenzdaten automatisch auf ihre Korrektheit verifiziert werden.

12. Datenverarbeitungssystem nach Anspruch 11, **dadurch gekennzeichnet, daß** durch die elektronische Kommunikation Vorgänge wie Rechtsgeschäfte, Transaktionen oder dergleichen, autorisierbar sind, daß mittels der vom Bürger abgegebenen Identifikationszeichenfolge (PIN) die korrekte Identifizierung des Bürgers verifiziert wird, und daß mittels der vom Bürger abgegebenen Transaktionszeichenfolge (TAN) die korrekte Autorisierung des Bürgers für das jeweilige Rechtsgeschäft verifiziert wird.

13. Datenverarbeitungssystem nach Anspruch 12, **dadurch gekennzeichnet, daß** die erste Datenverarbeitungsanlage (1) über ein zweites Datennetz (5) mit einer zweiten Datenverarbeitungsanlage (3) eines Dienstleisters auf elektronischem Weg kommunizieren kann, und daß die Referenzdaten auf einem der zweiten Datenverarbeitungsanlage (3) zugeordneten Datenspeicher 8 elektronisch gespeichert sind.
